# EUROPEAN PATENT APPLICATION

(11) **EP 4 664 184 A1**
(43) Date of publication of application: **17.12.2025**
(21) Application number: 25181382.0
(22) Date of filing: 06.06.2025
(51) Int. Cl.: G02B 27/00, G02B 27/01

(54) **IN-COUPLING OPTIMISATION**

(30) Priority: 11.06.2024 GB 202408305
(71) Applicant: Envisics Ltd, Milton Keynes MK1 1PT (GB)
(72) Inventor: COLE, Alexander, Milton Keynes, MK1 1PT (GB); SMEETON, Timothy, Milton Keynes, MK1 1PT (GB); MAHARJAN, Rakesh, Milton Keynes, MK1 1PT (GB)
(74) Representative: Greenaway, Martin William

(57) **Abstract**

A display system comprising an optical sub-system, a coupling lens and a first one-dimensional replicator. The optical sub-system is arranged to form an optimised wavefront. The optimised wavefront comprises chief rays. Each chief ray comprises a first component and a second component. The first component is a first angle in a first direction and the second component is a second angle in a second direction. The second angle is a function of the second direction. The first angle may be zero or constant. The coupling lens is arranged to receive the optimised wavefront and form a first pupil corresponding to the first direction and a second pupil corresponding to the second direction. The second pupil is displaced from the first pupil owing to a difference between the first angle and second angle. That is, the first and second pupil are formed on different planes in the z-direction. For example, the second pupil may be downstream of the first pupil. An entrance port of a first one-dimensional replicator is substantially aligned with the first pupil.

## Description

### FIELD

The present disclosure relates to pupil expansion and wavefront replication. More specifically, the present disclosure relates to a display system comprising a waveguide pupil expander and to a method of optimising light coupling into the waveguide pupil expander. Some embodiments relate to two-dimensional pupil expansion or wavefront replication. Some embodiments relate to a picture generating unit and a head-up display, for example an automotive head-up display (HUD).

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

A first aspect of the present disclosure is a display system comprising an optical sub-system, a coupling lens and a first one-dimensional replicator. The optical sub-system is arranged to form an optimised wavefront. The optimised wavefront comprises chief rays. Each chief ray comprises a first component and a second component. The first component is a first angle in a first (e.g. horizontal or x) direction and the second component is a second angle in a second (e.g. vertical or y) direction. More specifically, the first angle is an angle with the optical or z-axis on the x-z plane and the second angle is an angle with the optical or z-axis on the y-z plane. The second angle is a function of the second (y) direction. The first angle may be zero or constant. The coupling lens is arranged to receive the optimised wavefront and form a first (x) pupil corresponding to the first (x) direction and a second (y) pupil corresponding to the second (y) direction. The second (y) pupil is displaced from the first (x) pupil owing to a difference between the first angle and second angle. That is, the first and second pupil are formed on different planes in the z-direction. For example, the second pupil may be downstream of the first pupil. The first one-dimensional replicator is arranged to replicate light in the first (x) direction. An entrance port of the first one-dimensional replicator is substantially aligned with the first (x) pupil.

The optical efficiency of a display system including a replicator can present a challenge due to coupling losses at the entrance port thereof. The inventors have found that optimal coupling can be achieved by positioning the entrance port of the one-dimensional replicator at the focal length of a coupling lens where a pupil is formed. Notably, the inventors have further recognize that changing the direction of chief rays of the wavefront received by the coupling lens can change the position of the pupil formed by the lens and therefore be used to optimize coupling into a one-dimensional replicator. For example, chief ray angles of the wavefront incident on the coupling lens may be manipulated in order to match (e.g. in position, size and/or shape) the pupil to the entrance port of the replicator.

Optical efficiency is even more a challenge in a two-dimensional replicator where the entrance port of the first and second replicator are different distances from the coupling lens. In a further improvement disclosed herein, independent x and y pupil positions are formed by using different x and y chief ray directions. The chief ray is optimized in x to put the x pupil at the entrance port of the first replicator and, independently, the chief ray is optimized in y to put the y pupil at the entrance port of the second replicator. The inventors have found that the present disclosure provides a significant increase in light coupling efficiency into the replicators.

The second angle of the optimized wavefront increases or decreases (in magnitude) with distance in the second (y) direction from the centre of the coupling lens. The increase or decrease with distance in the second (y) direction may be linear.

The first angle may be zero in which case the chief ray is normal to the plane of the coupling lens. The first angle may be constant (in the first direction). That is, the first angle may not be a function of distance from the centre of the coupling lens in the first (x) direction.

In an embodiment, the display system further comprises a second one-dimensional replicator arranged to replicate (light) in the second (y) direction. An entrance pupil of the second replicator may be substantially aligned with the second (y) pupil.

The maximum difference between the first angle and second angle may be less than 20 degrees such as 5 to 12 degrees. The maximum difference between the first angle and second angle may correspond to chief rays at the edge of the wavefront or at the maximum (or minimum) value of the wavefront in the second (y) direction.

The optical sub-system may comprise an image-forming optic arranged to receive a source wavefront. The source wavefront comprises chief rays characterised by a first angle in a first (x) direction and a second angle in a second (y) direction. The first angle may be constant with the first (x) direction and the second angle may be constant with the first (y) direction. The image-forming optic may be arranged to output the optimised wavefront.

The image-forming optic may comprise at least one toroidal or cylindrical surface. In some embodiments, the image-forming optic comprises a complementary pair of toroidal lens or cylindrical surfaces. The image-forming optic may be arranged to provide one-dimensional compress (of the image represented by the wavefront or encoded in the wavefront). The image-forming optic may be arranged to substantially direct the wavefront to one side of the optical axis. This is advantageous in embodiments in which the image is formed by a hologram and therefore comprises a zero-order spot at the centre of the replay field as well as complex conjugates. These features may be excluded by utilising one half of the replay field or a sub-area of one half of the replay field.

In some embodiments, the wavefront is an image or corresponds to an image. In some embodiments, the optical sub-system comprises a screen and an image is formed (or displayed) on the screen. The image may be a holographic reconstruction. The screen may be arranged to receive a (source) wavefront from a display device. The screen may be diffuse. In these embodiments, each light ray received of the (source) wavefront received by the screen is effectively spread over a diffusion angle of the diffuse screen. However, the angular "spread" provided by the diffuse screen is a spread about the light ray angle received by the screen. For example, the screen may receive a wavefront characterised by chief rays. The general direction (i.e. the optical or propagation axis) of each chief ray is not changed by the diffuse screen but, instead, the light is spread or distributed over a small range of angles about the respective chief ray. This small range of angles may be referred to as a "diffusion angle". In some embodiments, the diffuse nature of the screen is isotropic. That is, the diffusion angle in the x-direction (i.e. angle with the z-axis on the x-z plane) is substantially equal to that in the y-direction (i.e. angle with the z-axis on the y-z plane).

The optical sub-system and coupling lens form an optimized wavefront for a (wavefront) replicator having an entrance or input port for receiving a wavefront for replication. In some embodiments, at least one of a size, shape and position of the first pupil is substantially equal to that of the entrance port of the first one-dimensional replicator/s.

The optical sub-system may comprise a second one-dimensional replicator. The second one-dimensional replicator has an entrance port coupled to an output port of the first one-dimensional replicator. That is, the second one-dimensional replicator may be arranged to receive the output of the first one-dimensional replicator. The first one-dimensional replicator may replicate the optimised wavefront in a first (x) direction and the second one-dimensional replicator may replicate the 1D array of optimised wavefronts (output by the first replicator) in the second (y) direction, wherein x and y are perpendicular. At least one of a size, shape and position of the second pupil may be substantially equal to that of the entrance port of a second one-dimensional replicator. The first one-dimensional replicator may comprise a first waveguide. Additionally, or alternatively, the second one-dimensional replicator may comprise a second waveguide. The first waveguide may be substantially elongate such as rod-shaped. The second waveguide may be substantially planar such as slab-shaped.

In some embodiments, the distance from the image plane to the coupling lens is equal to a focal length of the coupling lens. Additionally, or alternatively, the distance from the coupling lens to the first pupil may be equal to a focal length of the coupling lens.

A second aspect of the present disclosure is a method of increasing the optical efficiency of light coupling into a replicator or waveguide. The method comprises optimising the chief ray angles of the wavefront prior to in-coupling. The method of optimising the chief ray angles may comprise independently changing a first or second component of at least one of the chief rays (e.g. received on the intermediate plane e.g. screen). The method of optimising the chief ray angles comprises creating a respective first pupil and second pupil that are different distances from the coupling lens. It may therefore be said that the second pupil is displaced (in the z-direction) from the first pupil. For example, the second pupil may be (optically) downstream of the first pupil.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

In some embodiments, the wavefront that is received by the display systyem is an image or wavefront representing (e.g. spatially modulated with) an image. In other embodiments, the wavefront that is received by the display system is a hologram or a wavefront representing (e.g. spatially modulated with) a hologram of an image or picture. In these embodiments, the wavefront is a diffractive wavefront or holographic wavefront. The terms "wavefront" and "light field" are used herein interchangeably. A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6 shows the principle of chief ray angle determining pupil location;
Figure 7 shows how the principle may be applied to separate an x and y pupil;
Figure 8 shows the horizontal plane of an embodiment;
Figure 9 shows the vertical plane of an embodiment;
Figure 10 shows the distance from the coupling lens to the first waveguide input port and second waveguide input port;
Figure 11A shows a cross section of the first waveguide in a comparative example; and
Figure 11B shows a cross section of the second waveguide in accordance with embodiments that provide improved optical coupling.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

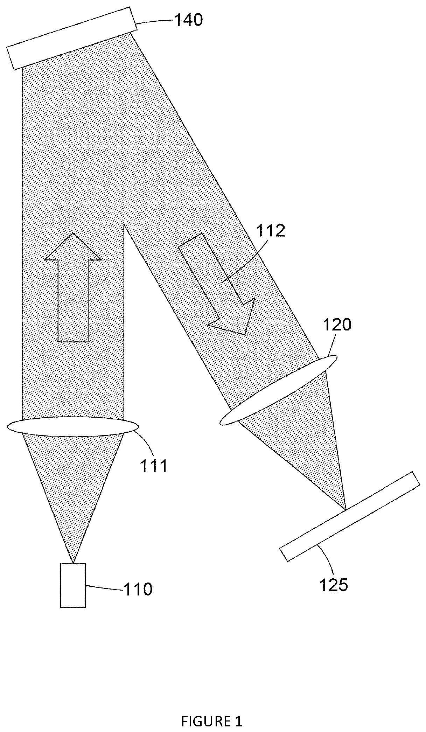

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box).

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some arrangements, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light modulation

The display system comprises a display device which in embodiments defines the exit pupil of the display system. The display device is a spatial light modulator. The spatial light modulation may be a phase modulator. The display device may be a liquid crystal on silicon, "LCOS", spatial light modulator.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

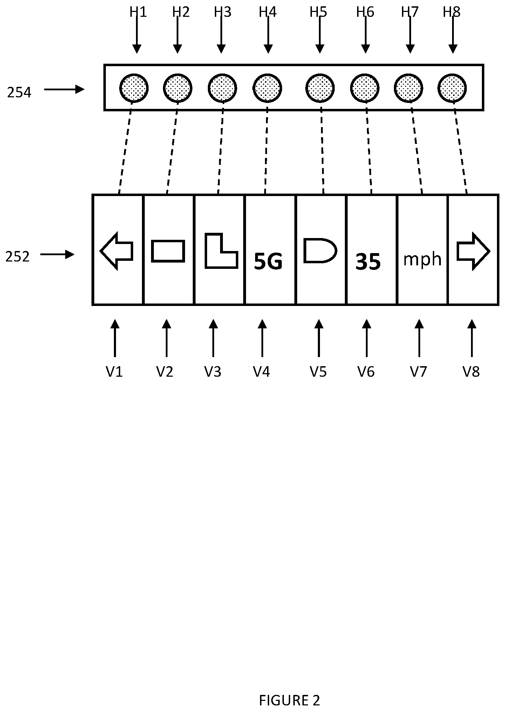

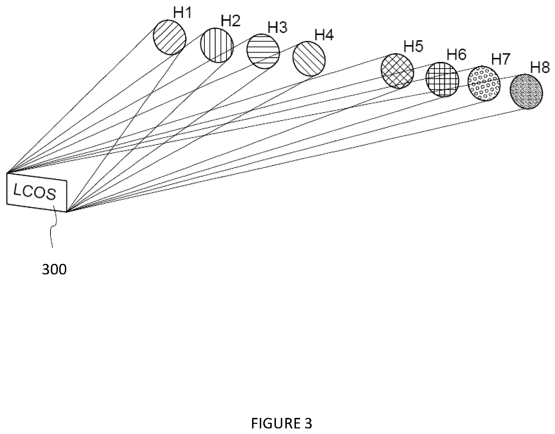

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

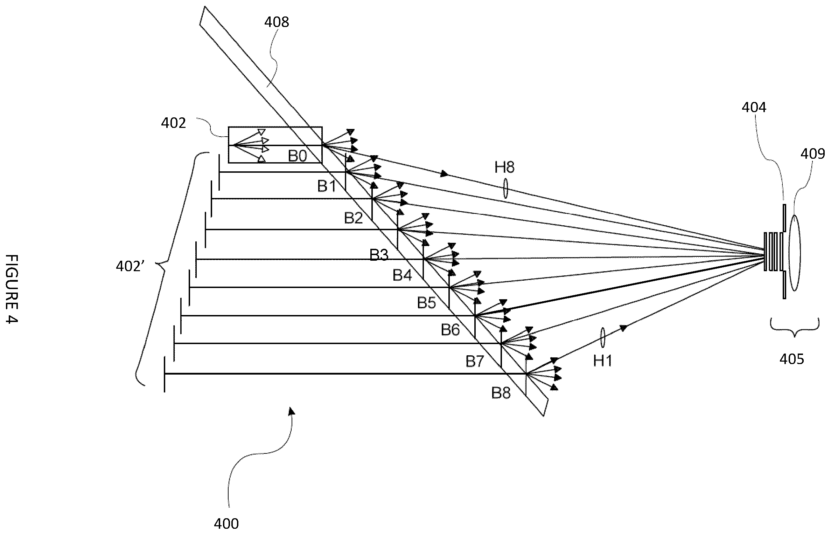

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

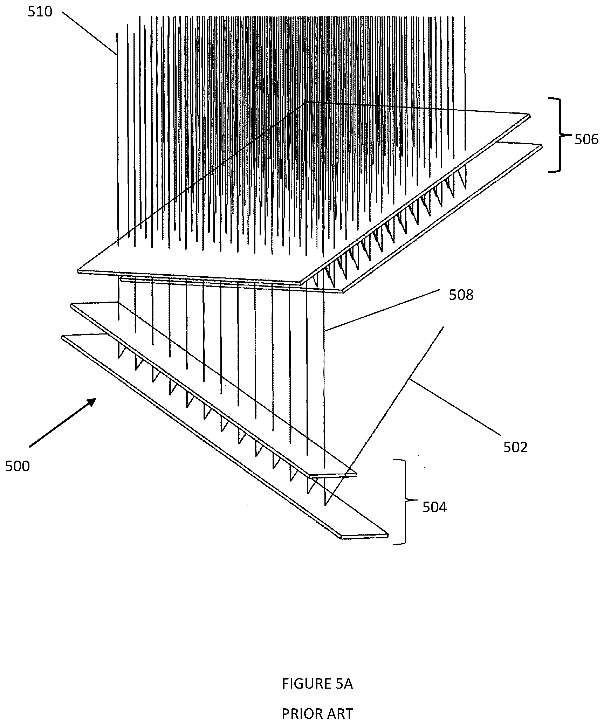

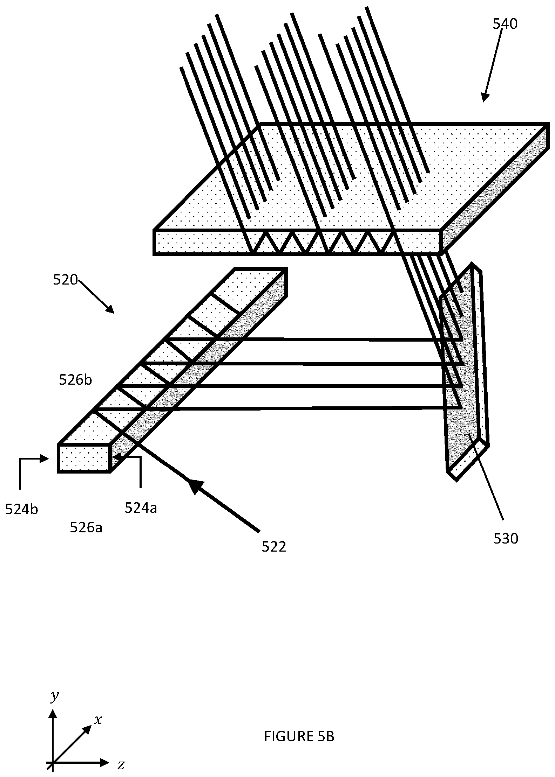

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extent by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the deliver of hologram light channels, and their replicas, to the eye-box. Each aperture or window may comprise a plurality of liquid crystal cells or pixels.

### Chief ray optimisation

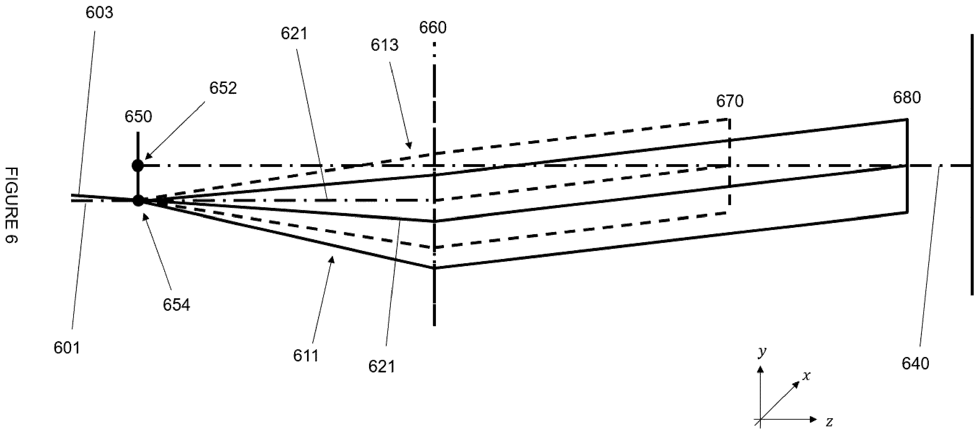

Broadly, Figure 6 shows a principle of the concept conceived by the inventors. The inventors addressed the problem of how to achieve efficient light coupling into at least one one-dimensional waveguide or pupil expander. A coupling lens is used to improve light coupling in the waveguide. The coupling lens receives a wavefront corresponding to the image. The coupling lens may be used (i.e. positioned) to form a pupil that receives all light ray angles of the wavefront. The focal plane of the coupling lens may be aligned (e.g. coincident or coplanar) with an (intermediate) image plane (of the image). The angle of chief rays forming the image on the (intermediate) image plane determine the distance from the coupling lens to the pupil. Firstly, the inventors recognised that chief ray angle could therefore be used to align the pupil formed by the coupling lens with the entrance port or window of a waveguide. Notably, the inventors further recognised that a first (e.g. horizontal) and second (e.g. vertical) pupil are formed if the chief ray angle has a different component in the first (e.g. horizontal) direction than the second (e.g. vertical) direction. Moreover, the inventors recongised that this is highly synergistic with a display system using one-dimensional replicator or pupil expansion because it means that one pupil (e.g. a horizontal pupil) can be aligned with a one-dimensional replicator (e.g. providing replication in the horizontal direction) and, optionally, another pupil (e.g. a vertical pupil) can be aligned with a second one-dimensional replicator (e.g. providing replication in the vertical direction). The direction of the pupil and that of the replicator are matched i.e. are the same. Accordingly, optimised light coupling - in the direction of replicator - can be provided. Most notably, if the display system comprises two one-dimensional replicators (e.g. a first replicator in x and a second replicator in y), the first (x) pupil of the coupling lens may be aligned with the input to the first replicator and the second (y) pupil of the coupling lens may be aligned with the input to the second replicator - even in cases in which the first and second replicators are different distances from the coupling lens - which is common in two-dimensional pupil expansion / replication. The process of tuning the chief ray angle to align a pupil (e.g. coupling lens pupil) with the entrance port or input window of a waveguide or pupil expander is referred to herein as chief ray optimisation.

In more detail, Figure 6 shows a diffuse screen or diffuser 650 arranged to display an image. The image may be a holographic reconstruction formed by illuminating a hologram of the image. The image is formed by a display device. The light received at the diffuser 650 is characterised by chief rays. At least conceptually, the image may comprise a plurality of image points such a first image point 652 and second image point 654. As the person skilled in the art of optics will understand, each image point is formed by a light ray bundle that may be characterised by a chief ray or a chief ray angle arriving at the diffuser 650. The chief ray angle is an angle in three-dimensional space that may be defined by a first component / angle with the optical axis on a first plane (e.g. a horizontal plane) and a second component / angle with the optical axis on a second plane (e.g. a vertical plane).

Figure 6 shows the first image point 652 is on the optical axis 640 - that is, at the point where in the diffuser 650 intersects the optical axis 640. Regarding the second image point 654, Figure 6 shows two different examples in order to illustrate a concept of the present disclosure. In a first example, the second image point 654 corresponds to a first chief ray 601 that is perpendicular to the plane of the diffuser 650. More specifically, the first chief ray 601 is parallel with the optical axis 640 on the y-z plane. The first chief ray 601 is normal to the plane of the diffuser 650. The diffuser 650 diffuses the received light characterised by the first chief ray 601. A first diffuse cone of light 613, corresponding to the first chief ray 601, is therefore emitted from the diffuser. The first diffuse cone of light 613 is characterized by a first axis 621 that is a continuation of the first chief ray 601. The first axis 621 corresponds to a chief ray of the light emanating from the diffuser 650. The angle of the first chief ray 601 forming the first image point 601 is not changed by the diffuser 650. However, owing to the diffuse nature of the diffuser 650, the light is effectively spread over a cone. The first chief ray 601 arriving at the diffuser 650 therefore corresponds to a first image point 654 on the diffuser 650 and a first light ray cone 613 about the first axis 621 downstream of the diffuser 650. In a second example, the second image point 654 corresponds to a second chief ray 603 that is not perpendicular to the plane of the diffuser 650. More specifically, there is an acute angle between the second chief ray 603 and the optical axis 640 on the y-z plane. The diffuser 650 also diffuses the second chief ray 603 to form a second light ray cone 611 about a second axis 621. The second axis 621 is a continuation of the second chief ray 603. The first example therefore corresponds to a first chief ray angle (with the z-axis on the y-z plane) and the second example corresponds to a second chief ray angle (with the z-axis on the y-z plane). The light emanating from the diffuser 650 is received by a coupling lens 660. The distance from the diffuser 650 to the coupling lens 660 is equal to the focal length of the coupling lens 660. In other words, the diffuser 650, or image formed thereon, is disposed at the focal plane of the coupling lens 660. The coupling lens 660 therefore collimates the received light. Importantly, the coupling lens 660 forms a pupil and it is found that the angle of the chief ray forming the image determines the position of the pupil - more specifically, the (perpendicular) distance from the coupling lens to a plane of the pupil (in the z-direction). Figure 6 therefore shows how the first example, corresponding to a first chief ray 601, forms a first pupil 670 at a first distance from the coupling lens 660 and the second example, corresponding to a second chief ray 603, forms a second pupil 680 at a second distance from the coupling lens 660. The first distance is less than the second distance. In other words, the second pupil 680 is downstream of the first pupil 670. In summary, Figure 6 shows how the angle of the chief rays forming the image on the diffuser 650 determines the position of a pupil formed by the coupling lens 660.

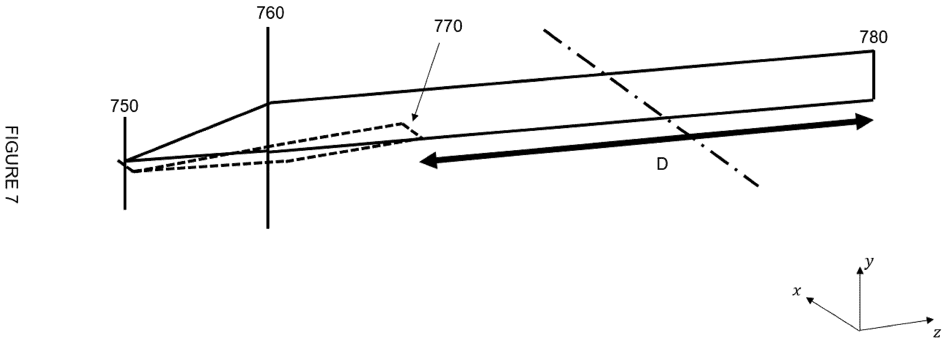

Notably, the inventors have formed two pupils using the coupling lens because the two orthogonal components of the chief ray angle are different. That is, if a first component of the chief ray angle is different to a second component of the chief ray angle. Figure 7 shows the concept. Figure 7 shows a diffuser 750, arranged to display an image thereon, at the focal plane of a coupling lens 760. Figure 7 shows how a first component of the chief ray angle forms a first pupil 770 and a second component of the chief ray angle forms a second pupil 780 downstream of the first pupil. The first component is a first angle that the chief ray makes with the z-axis on the x-z plane and the second component is a second angle that the chief ray makes with the z-axis on the y-z plane. The first pupil may be formed on the x-z plane and the second pupil may be formed on the x-y plane. The first pupil may be parallel to the x-axis and the second pupil may be parallel to the y-axis. For the avoidance of doubt, the image comprises a plurality of image points each characterised (e.g. formed) by a chief ray having a first (angular) component and second (angular) component. The first component corresponds to a first pupil and the second component to a second pupil formed by the coupling lens 760. The first pupil extends in a first direction and the second pupil extents in a second direction. In some embodiments, all image points have the same first component but a different second component. The first component of all image points may be zero or constant. The second component may be a function of the second direction - that is, may vary in the second direction e.g. linearly. A maximum or minimum of the function may correspond to the centre of the image. Figure 7 shows a distance or displacement between the first pupil 770 and second pupil 780 achieved by forming the image using chief rays having different components in the two perpendicular directions.

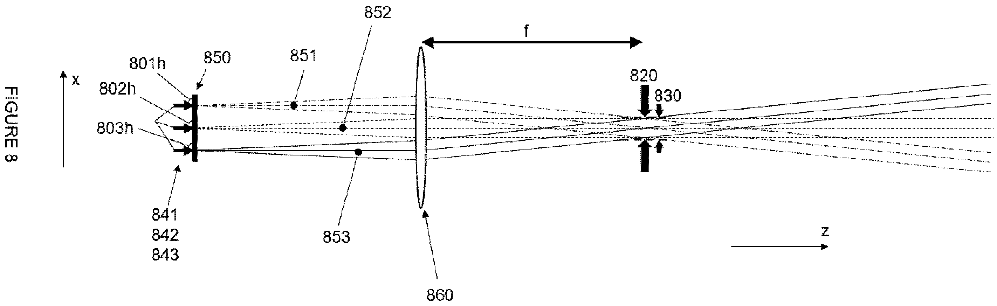

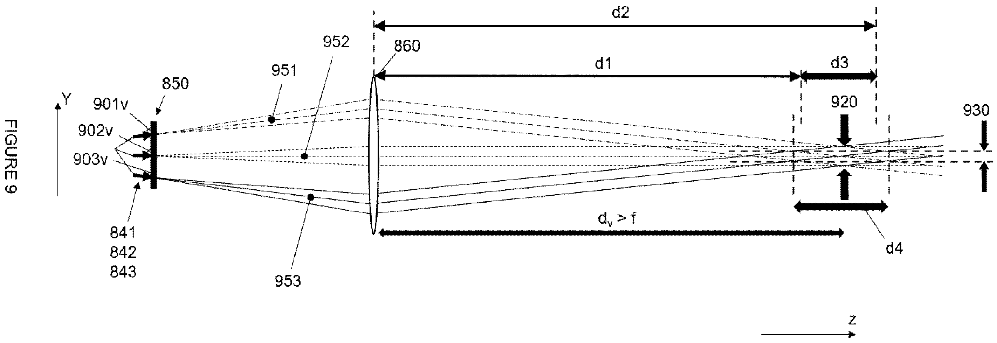

Figures 8 and 9 further show the effect of the chief rays (or chief ray angles) on pupil position.

Figure 8 represents a horizontal plane and shows three example chief rays 841-843 forming an image on a diffuser 850. On the horizontal plane shown, the angle of incidence of the chief rays - including the three example chief rays 841-843 - on the diffuser 850 is 90 degrees (i.e. normal incidence). The three example chief rays 841-843 makes a respective angle 801h-803h with the diffuser 850 on the horizontal plane shown. In this embodiment, 801h = 802h = 803h = 90 degrees (normal incidence). The diffuser 850 effectively spreads the light of each chief ray over a diffusion angle (e.g. +/- 5 degrees). Each image point and chief ray therefore gives rise to a diffuse cone of light. The three example chief rays 841-843 shown in Figure 8 give rise to respective diffuse cone of light 851-583. An axis of each diffuse cone 851-853 is therefore also normal to the plane of the diffuser.

The diffuse cones of light 851-853 are received by a coupling lens 860 which forms a first (horizontal) pupil 820 corresponding to the horizontal direction. At least one of the size, shape and position of the first pupil 820 may correspond to that of a first input port 830 of a first (horizontal) waveguide or pupil expander (not shown in Figure 8). The first pupil 820 may be substantially aligned with the first input port 830 of the first (horizontal) waveguide or pupil expander. The distance from the coupling lens 860 to the first (horizontal) pupil 820 is equal to the focal length of the coupling lens 860. The position of the first input port 830 ensures that the full range of (light ray) angles from the image are coupled into the first (horizontal) waveguide or pupil expander.

Figure 9 represents a vertical plane of the same embodiment and shows the three same example chief rays 841-843 forming the image on the diffuser 850. On the vertical plane shown, the chief rays are not all perpendicular to the diffuser 850. Moreover, the angle of incidence of the chief rays on the diffuser is non-uniform or non-constant. On the vertical plane shown, the angle of incidence is a function of the vertical direction, y. The three example chief rays 841-843 make a respective angle 901v-903v with the diffuser 850 on the vertical plane shown. In this embodiment, 902v = 90 degrees (normal incidence) but 901v > 90 degrees and 903v < 90 degrees. The diffuser 850 is isotropic in this embodiment - although the present disclosure equally encompasses an anisotropic diffuser characterised by a different diffusion angle in the x and y directions - and the diffuser 850 effectively spreads the light of each chief ray over the same diffusion angle (e.g. +/- 5 degrees) as per Figure 8. Each image point and chief ray therefore gives rise to a diffuse cone of light - on the vertical plane (Figure 9) as well as the horizontal plane (Figure 8). The three example chief rays 841-843 shown in Figure 9 give rise to respective diffuse cone of light 951-953. An axis of each diffuse cone 951-953 is therefore also a function of y.

The diffuse cones of light 951-953 are received by a coupling lens 860 which forms a second (vertical) pupil 920 corresponding to the vertical direction. At least one of the size, shape and position of the second pupil 920 may correspond to that of a second input port 930 of a second (vertical) waveguide or pupil expander (not shown in Figure 9). The second pupil 920 may be substantially aligned with the second input port 930 of the second (vertical) waveguide or pupil expander. The distance from the coupling lens 860 to the second (vertical) pupil 920 is not equal to the focal length of the coupling lens 860. In this embodiment, the distance from the coupling lens 860 to the second (vertical) pupil 920 is greater than the focal length of the coupling lens 860. The shortest propagation distance from the coupling lens 860 to the second pupil 920 is represented by first distance d1 in Figure 9 and the corresponding longest propagation distance is represented by second distance d2. A third distance d3 (= d2 - d1) represents a range of propagation distances to the second input port 930. In an embodiment, the second pupil 920 is positioned at the centre of the third distance d3. The position of the second input port 930 of the second waveguide or pupil expander ensures that the full range of (light ray) angles from the image are coupled into the second (vertical) waveguide or pupil expander. A fourth distance d4 - extending evenly either side of the second (vertical) pupil 920 - represents a range over which all (light ray) angles in the image exist. The fourth distance d4 may be greater than the third distance d3.

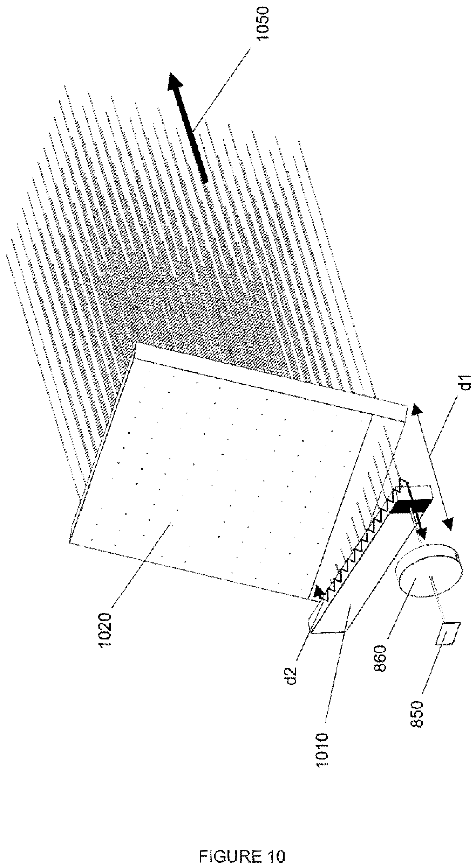

Figure 10 is a further representation of an embodiment showing a diffuser 850 arranged to display an image thereon, a coupling lens 860 arranged to receive diffuse light from the diffuser, a first waveguide 1010 arranged to replicate in a first (x) direction and a second waveguide 1020 arranged to replicator in a second (y) direction. The first waveguide 1010 has a first input port 1012 and the second waveguide 1020 has a second input port 1022. Figure 10 shows the distances d1 and d2 of Figure 9 - namely, the shortest propagation distance d1 and the longest propagation distance d2 from the coupling lens 860 to the second input port 1022 of the second waveguide 1020. The 2D array of replicas 1050 output by the display system is also shown in Figure 10.

The person skilled in the art of optical design knows how to manipulate the chief ray angles as described herein and shown in Figures 8 and 9 by way of example only. The person skilled would also know how to locate the x and y pupils formed by the coupling lens and therefore optically align or couple with the corresponding input port/s of the waveguide/s. The person skilled in the art will appreciate that an optical system - referred to herein as an "image-forming optic" - for this purpose may, in fact, comprise a plurality of optics such as lenses, lens pairs, curved surfaces, mirrors or prisms. In advantageous embodiments, the image-forming optic comprises at least one toroidal or cylindrical optical surface. The image-forming optic may be additionally arranged to provide one-dimensional compression and/or additionally arranged to substantially direct the wavefront to one side of its optical axis. The image-forming-optic may be arranged to be centred (or approximately centred) with an offset image for better performance. In some embodiments, the image-forming optic is substantially offset to one side of the optical axis and approximately centred with the image content. In some embodiments, the image-forming optic has different characteristics in the x and y directions and compresses the image (e.g. x2 or x3) in the y-direction.

In an embodiment - disclosed herein by way of example only - the image-forming optic (or optical system) comprises a first, second and third lens group. The first lens group comprises a (i) cylindrical lens and a standard spherical lens or (ii) a cylindrical lens. The second group comprises (i) a standard spherical lens and an aspherical lens or (ii) one standard lens. The third group comprises just one cylindrical lens. For the avoidance of doubt, the present disclosure is not limited to any one design for achieving the pupil separation disclosed herein. The person skilled in the art of optical design can provide the functionality of the aspects of this disclosure using any number of different designs.

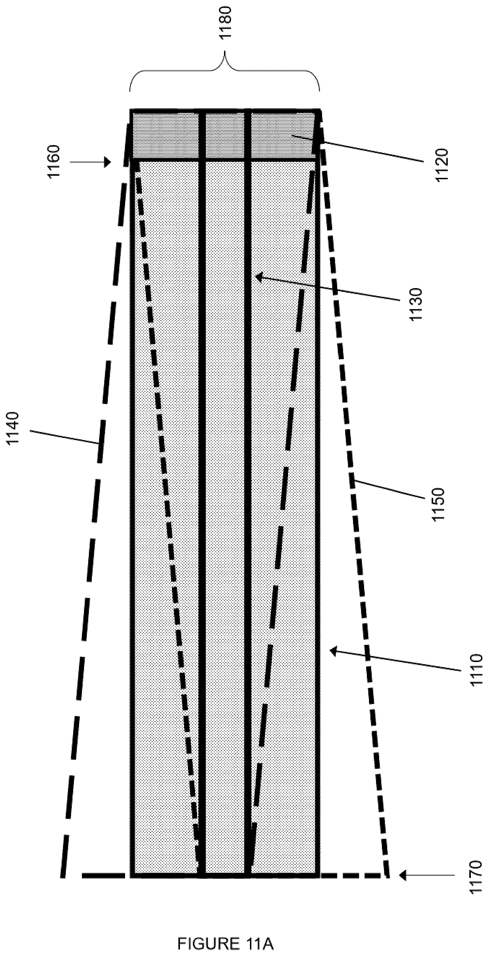

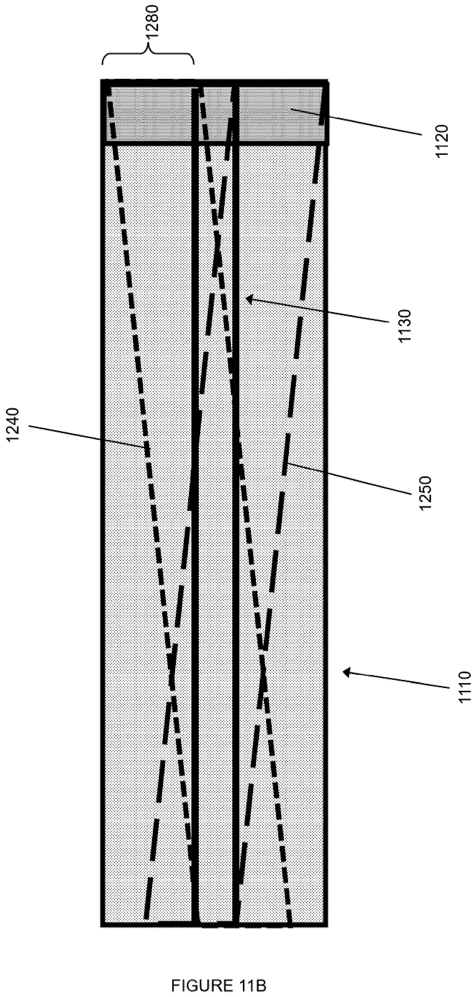

Figures 11A and 11B illustrate an advantage of the chief ray optimisation of the present disclosure in terms of light coupling efficiency into the waveguide or waveguides. Figure 11A represents a non-optimised configuration and Figure 11B represents an optimised configuration in accordance with embodiments.

Figure 11A shows an arrangement without chief ray optimisation. Figure 11A shows the first waveguide 1110 having a first input port 1120. The full height of the first waveguide is filled with pupil 1180. In the horizontal (x) direction, the light couples on the first edge 1160 in the plane of the page. In the vertical (y) direction, light couple of the second edges 1170 beyond the plane of the page. A projection of the second input port 1130 of the second waveguide is shown running along the longitudinal axis of the first waveguide 1110. A "negative" light ray bundle 1140 corresponding to one side of the image ("negative" angles of the light ray bundles of Figure 8) and a "positive" light ray bundle 1150 corresponding to the other side of the image ("positive" angles of the light ray bundles of Figure 8) are shown.

Figure 11B shows an arrangement with chief ray optimisation. Figure 11B also shows the first waveguide 1110 and first input port 1120. In this embodiment, the angular content entry is matched to the propagation direction and where the light is coupled into the second waveguide. The "negative" angles are represented by the negative light ray bundle 1240 and the "positive" angles are represented by the positive light ray bundle 1250. In this embodiment, more efficient light coupling is achieved as represented by the increased overlap between the (projection of the) second input port 1130 and the two light ray bundles 1240, 1250.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A display system comprising:
an optical sub-system arranged to form an optimised wavefront comprising chief rays each **characterised by** a first angle in a first direction and a second angle in a second direction, wherein the second angle is a function of the second direction;
a coupling lens arranged to receive the optimised wavefront and form a first pupil corresponding to the first direction and a second pupil corresponding to the second direction, wherein the second pupil is displaced from the first pupil owing to a difference between the first angle and second angle; and
a first one-dimensional replicator arranged to replicate light in the first direction, wherein an entrance port of the first one-dimensional replicator is substantially aligned with the first pupil.

2. A display system as claimed in claim 1 wherein the second angle of the optimised wavefront increases or decreases with distance from the centre of the coupling lens in the second direction.

3. A display system as claimed in claim 2 wherein the increase is linear

4. A display system as claimed in any preceding claim wherein the first angle is zero.

5. A display system as claimed in any preceding claim wherein the first angle is constant.

6. A display system as claimed in any preceding claim further comprising a second one-dimensional replicator arranged to replicate in the second direction, wherein an entrance port of the second one-dimensional replicator is substantially aligned with the second pupil.

7. A display system as claimed in any preceding claim wherein the maximum difference between the first angle and second angle is less than 20 degrees such as 5 to 12 degrees.

8. A display system as claimed in any preceding claim wherein the optical sub-system comprises an image-forming optic arranged to: receive a source wavefront comprising chief rays **characterised by** a first angle in a first direction and a second angle in a second direction, wherein the first angle is constant with the first direction and the second angle is constant with the first direction; and output the optimised wavefront,
optionally wherein the image-forming optic comprises at least one toroidal or cylindrical optical surface.

9. A display system as claimed in claim 8 wherein the image-forming optic is arranged to provide one-dimensional compression.

10. A display system as claimed in any of claims 8 or 9 wherein the image-forming optic is arranged to substantially direct the wavefront to one side of its optical axis.

11. A display system as claimed in any preceding claim wherein the optical sub-system further comprises a screen arranged to receive the source wavefront and form an image thereon,
optionally wherein the screen is diffuse such that the image is diffuse and **characterised by** a diffusion angle,
further optionally wherein the diffusion angle in the x-direction is substantially equal to that in the y-direction.

12. A display system as claimed in any preceding claim wherein at least one of a size, shape and position of the first pupil is substantially equal to that of the entrance port of the first one-dimensional replicator/s.

13. A display system as claimed in any preceding claim wherein at least one of a size, shape and position of the second pupil is substantially equal to that of the entrance port of a second one-dimensional replicator, wherein the second one-dimensional replicator has an entrance port coupled to an output port of the first one-dimensional replicator.

14. A display system as claimed in any preceding claim wherein the distance from the image plane to the coupling lens is equal to the focal length of the coupling lens and/or the distance from the coupling lens to the first pupil is equal to the focal length of the coupling lens.

15. A display system as claimed in any preceding claim wherein the first one-dimensional replicator comprises a waveguide and/or the second one-dimensional replicator comprises a waveguide,
optionally wherein the first one-dimensional replicator is substantially elongate and the second one-dimensional replicator is substantially planar.
